# EUROPEAN PATENT APPLICATION

(11) **EP 4 520 473 A1**
(43) Date of publication of application: **12.03.2025**
(21) Application number: 24196296.8
(22) Date of filing: 23.08.2024
(51) Int. Cl.: B23P 15/02, B23K 26/382, B23K 26/144, B23P 6/00, F01D 5/18

(54) **MULTI-PROCESS MACHINING OF A WORKPIECE**

(30) Priority: 25.08.2023 US 202318238214
(71) Applicant: RTX Corporation, Farmington, CT 06032 (US)
(72) Inventor: DENNEY, Paul E., Northborough, 01532 (US)
(74) Representative: Dehns

(57) **Abstract**

During a manufacturing method, a workpiece (106) is provided that includes a face surface (118) and a back surface (134). A first aperture (108) is machined into the workpiece (106) using an energy beam (114). The first aperture (108) projects partially into the workpiece (106) from the face surface (118) to an end of the first aperture (108). A waterjet (128) is directed into the first aperture (108) to machine a second aperture (124) into the workpiece (106). The second aperture (124) extends from the end of the first aperture (108) to the back surface (124).

## Description

### BACKGROUND OF THE DISCLOSURE

### 1. Technical Field

This disclosure relates generally to machining and, more particularly, to machining a workpiece with a waterjet.

### 2. Background Information

A gas turbine engine includes various fluid cooled components such as turbine blades and turbine vanes. Such fluid cooled components may include one or more cooling apertures extending through a sidewall of the respective component. Various methods are known in the art for forming cooling apertures, including methods which machine the cooling apertures with an energy beam or a waterj et. While these known cooling aperture formation methods have various benefits, there is still room in the art form improvement. For example, where the sidewall includes a ceramic coating over a metal substrate, forming a cooling aperture through the sidewall using laser drilling (or another high energy process) may cause spallation and/or delamination of the ceramic coating. While using a waterjet to form the cooling aperture in the ceramic coating may reduce or prevent spallation and/or delamination of the ceramic coating, excessive coating material may be removed by the waterjet, particularly where the waterjet initially impinges against an outer surface of the ceramic coating at an acute angle. This excessive removal of the coating material may lead to formation of an oversized and/or irregular cooling aperture outlet. The waterjet may also skip along the ceramic coating and form another aperture in the outer surface.

### SUMMARY OF THE DISCLOSURE

According to an aspect of the present disclosure, a manufacturing method is provided. During this manufacturing method, a workpiece is provided that includes a face surface and a back surface. A first aperture is machined into the workpiece using an energy beam. The first aperture projects partially into the workpiece from the face surface to an end of the first aperture. A waterjet is directed into the first aperture to machine a second aperture into the workpiece. The second aperture extends from the end of the first aperture to the back surface.

According to another aspect of the present disclosure, another manufacturing method is provided. During this manufacturing method, a workpiece is provided with a face surface and a back surface. The workpiece extends between the face surface and the back surface. The workpiece is machined with an energy beam to form a blind aperture. The blind aperture projects into the workpiece from the face surface. The workpiece is machined with a waterjet to extend the blind aperture to the back surface and form a cooling aperture. The cooling aperture extends from an inlet in the back surface to an outlet in the face surface.

According to still another aspect of the present disclosure, another manufacturing method is provided. During this manufacturing method, a workpiece with a face surface and a back surface is provided. The workpiece includes a substrate and a coating over the substrate. The substrate forms the back surface. The coating forms the face surface. A pilot aperture is formed into or through the coating. The pilot aperture is extended through a remainder of the workpiece to the back surface using a waterjet.

The following optional features may be applied to any of the above aspects.

The blind aperture may project into the workpiece to an end surface. A centerline of the waterjet may be angularly offset from the end surface by an angle when the machining of the workpiece with the waterjet begins. The angle may be between eighty-five degrees and ninety degrees.

The workpiece may include a substrate and a coating over the substrate. The blind aperture may project through the coating to or into the substrate.

The energy beam may be a pulsed laser beam.

The energy beam may be a laser beam generated by a percussion laser machining device.

The energy beam may be a laser beam generated by an ablation laser machining device.

The workpiece may include a substrate and a coating over the substrate. The first aperture may project from the face surface and partially into or through the coating.

The coating may be configured from or otherwise include a ceramic material.

The coating may be configured from or otherwise include a metal material.

A centerline of the first aperture may be angularly offset from the face surface by an acute angle.

The energy beam may extend along a centerline when machining the first aperture. The waterjet may extend along the centerline when machining the second aperture.

A centerline of the waterjet may be perpendicular to the end of the first aperture formed by the energy beam when the waterjet is initially directed into the first aperture to begin machining the second aperture.

The waterj et may enlarge the first aperture providing an enlarged first aperture during the machining of the second aperture.

At least the enlarged first aperture and the second aperture may form a cooling aperture in the workpiece. The cooling aperture may extend from an inlet in the back surface to an outlet in the face surface.

The waterjet may remove recast and/or thermally damaged material from the first aperture during the machining of the second aperture.

A centerline of the second aperture may be angularly offset from the face surface by an acute angle.

The waterj et may be formed by a mixture of water and media entrained in the water.

The manufacturing method may also include forming a component of a turbine engine. The forming of the component may include the machining of the first aperture and the machining of the second aperture. A cooling hole may include the first aperture and the second aperture.

The cooling hole may include a meter section and a diffuser section. An outlet of the diffuser section may be substantially formed by the machining of the first aperture with the energy beam.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side cutaway illustration of a geared turbofan turbine engine.
FIG. 2 is an illustration of a portion of a fluid cooled component.
FIG. 3 is a sectional illustration of a portion of the fluid cooled component taken along line 3-3 in FIG. 2.
FIG. 4 is a sectional illustration of a portion of the fluid cooled component with another cooling aperture arrangement.
FIG. 5 is a flow diagram of a method for manufacturing a component.
FIG. 6 is a sectional illustration of a portion of a workpiece.
FIGS. 7A-C are schematic illustrations of an energy beam machining device forming various first apertures into the workpiece.
FIG. 8 is a schematic illustrations of a waterjet machining device forming a second aperture into the workpiece.

### DETAILED DESCRIPTION

The present disclosure includes methods for manufacturing a component such as a fluid cooled component of a gas turbine engine. The term "manufacturing" may describe a process for original manufacturing the component; e.g., creating a brand new component. The term "manufacturing" may also or alternatively describe a process for remanufacturing or otherwise repairing the component; e.g., restoring one or more features of a previously formed component to brand new condition, similar to brand new condition, better than brand new condition, etc. The component, for example, may be repaired to fix one or more defects (e.g., cracks, wear and/or other damage) imparted during previous use of the component. The component may also or alternatively be repaired to fix one or more defects imparted during the initial formation of the component.

For ease of description, the turbine engine may be described below as a turbofan turbine engine. The present disclosure, however, is not limited to such an exemplary gas turbine engine. The turbine engine, for example, may alternatively be configured as a turbojet turbine engine, a turboprop turbine engine, a turboshaft turbine engine, a propfan turbine engine, a pusher fan turbine engine or an auxiliary power unit (APU) turbine engine. The turbine engine may be configured as a geared turbine engine or a direct drive turbine engine. The present disclosure is also not limited to aircraft applications. The turbine engine, for example, may alternatively be configured as a ground-based industrial turbine engine for power generation, or any other type of turbine engine which utilizes fluid cooled components.

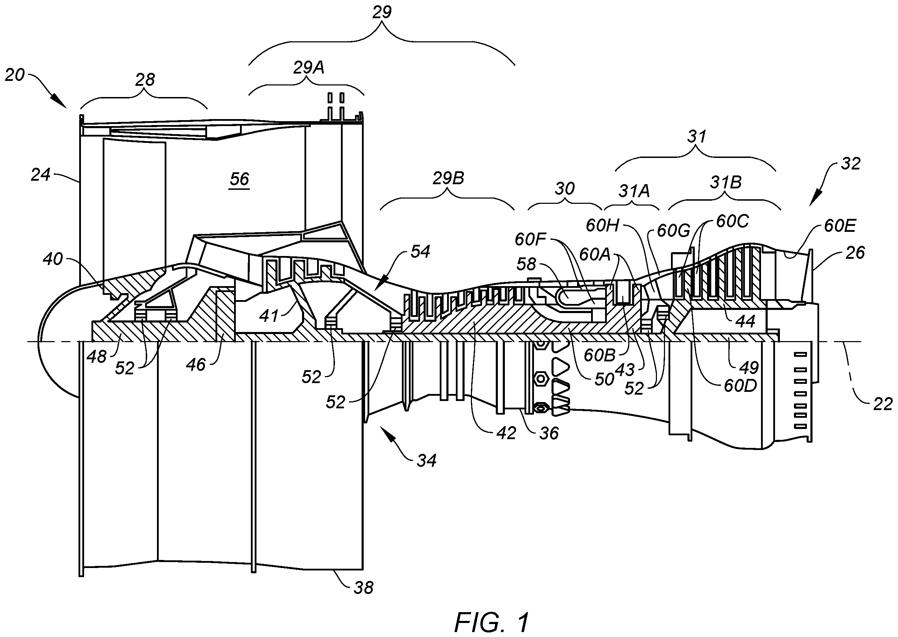

FIG. 1 is a side cutaway illustration of the turbofan turbine engine 20. This turbine engine 20 extends along an axial centerline 22 between a forward, upstream airflow inlet 24 and an aft, downstream combustion products exhaust 26. The turbine engine 20 includes a fan section 28, a compressor section 29, a combustor section 30, a turbine section 31 and an exhaust section 32 (partially shown in FIG. 1). The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31B of FIG. 1 are arranged sequentially along the axial centerline 22 within an engine housing 34. This engine housing 34 includes an inner case 36 (e.g., a core case) and an outer case 38 (e.g., a fan case). The inner case 36 may house one or more of the engine sections 29A-31B; e.g., a core of the turbine engine 20. The outer case 38 may house at least the fan section 28.

Each of the engine sections 28, 29A, 29B, 31A and 31B includes a respective bladed rotor 40-44. Each of these bladed rotors 40-44 includes a plurality of rotor blades arranged circumferentially around and connected to one or more respective rotor disks. The rotor blades, for example, may be formed integral with or mechanically fastened, welded, brazed and/or otherwise attached to the respective rotor disk(s).

The fan rotor 40 is connected to a geartrain 46, for example, through a fan shaft 48. The geartrain 46 and the LPC rotor 41 are connected to and driven by the LPT rotor 44 through a low speed shaft 49. The HPC rotor 42 is connected to and driven by the HPT rotor 43 through a high speed shaft 50. The engine shafts 48-50 are rotatably supported by a plurality of bearings 52; e.g., rolling element and/or thrust bearings. Each of these bearings 52 is connected to the engine housing 34 by at least one stationary structure such as, for example, an annular support frame.

During operation, air enters the turbine engine 20 through the airflow inlet 24. This air is directed through the fan section 28 and into a core flowpath 54 and a bypass flowpath 56. The core flowpath 54 extends sequentially through the engine sections 29A-32; e.g., the engine core. The air within the core flowpath 54 may be referred to as "core air". The bypass flowpath 56 extends through a bypass duct, which bypasses the engine core. The air within the bypass flowpath 56 may be referred to as "bypass air".

The core air is compressed by the LPC rotor 41 and the HPC rotor 42 and directed into a combustion chamber 58 of a combustor in the combustor section 30. Fuel is injected into the combustion chamber 58 and mixed with the compressed core air to provide a fuel-air mixture. This fuel air mixture is ignited and combustion products thereof flow through and sequentially cause the HPT rotor 43 and the LPT rotor 44 to rotate. The rotation of the HPT rotor 43 and the LPT rotor 44 respectively drive rotation of the HPC rotor 42 and the LPC rotor 41 and, thus, compression of the air received from a core airflow inlet. The rotation of the LPT rotor 44 also drives rotation of the fan rotor 40, which propels the bypass air through and out of the bypass flowpath 56. The propulsion of the bypass air may account for a majority of thrust generated by the turbine engine 20; e.g., more than seventy-five percent (75%) of engine thrust. The turbine engine 20 of the present disclosure, however, is not limited to the foregoing exemplary thrust ratio.

The turbine engine 20 includes a plurality of fluid cooled components (e.g., 60AH; generally referred to as "60") arranged within, for example, the combustor section 30, the turbine section 31 and/or the exhaust section 32. Examples of these fluid cooled components 60 include airfoils such as, but not limited to, a rotor blade airfoil (e.g., 60A, 60D) and a stator vane airfoil (e.g., 60B, 60C, 60H). Other examples of the fluid cooled components 60 include flowpath walls such as, but not limited to, a combustor liner (e.g., 60F), an exhaust duct liner (e.g., 60E), a shroud or other flowpath wall (e.g., 60G), a rotor blade platform, a stator vane platform, and the like. Of course, various other fluid cooled components may be included in the turbine engine 20, and the present disclosure is not limited to any particular types or configurations thereof.

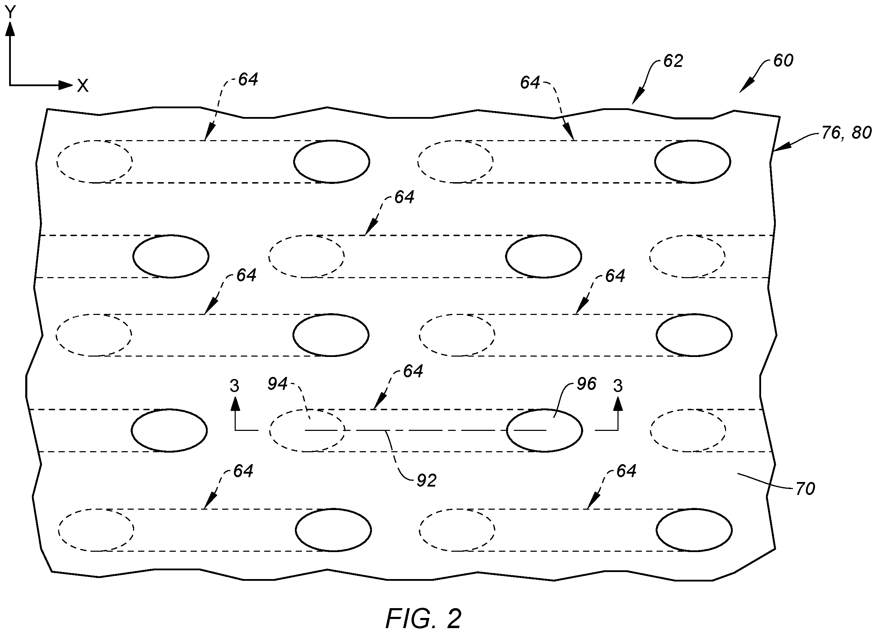

FIG. 2 illustrates a portion of one of the fluid cooled components 60 within the turbine engine 20. This fluid cooled component 60 has a component wall 62 (e.g., a sidewall or an endwall) configured with one or more cooling apertures 64 such as effusion apertures.

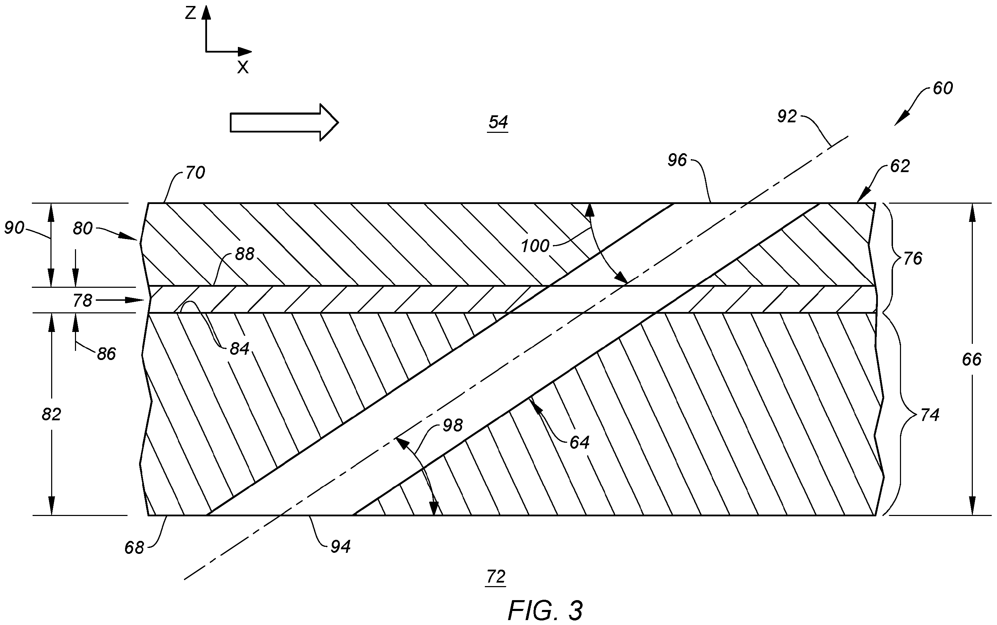

Referring to FIG. 3, the component wall 62 has a thickness 66 that extends vertically (e.g., along a z-axis) between and to a first surface 68 of the component wall 62 and a second surface 70 of the component wall 62. The component first surface 68 may be configured as an interior, a cold side and/or a back surface of the component wall 62. The component first surface 68, for example, may at least partially form a peripheral boundary of a cooling fluid volume 72 (e.g., a cavity or a passage) along the component wall 62. The component first surface 68 may thereby be subject to relatively cool fluid (e.g., cooling air) supplied to the cooling fluid volume 72. This cooling fluid volume 72 may be an internal volume formed within the fluid cooled component 60 where, for example, the component 60 is an airfoil. Alternatively, the cooling fluid volume 72 may be an external volume formed external to the fluid cooled component 60 where, for example, the component 60 is a flowpath wall. The component second surface 70 may be configured as an exterior, a hot side and/or a face surface of the fluid cooled component 60 and its component wall 62. The component second surface 70, for example, may at least partially form a peripheral boundary of a portion of, for example, the core flowpath 54 along the component wall 62. The component second surface 70 may thereby be subject to relative hot fluid (e.g., combustion products) flowing through the core flowpath 54 within, for example, one of the engine sections 30-32 of FIG. 1.

The component wall 62 of FIG. 3 includes a component substrate 74 and a coating system 76. The coating system 76 may include one or more external component coatings 78 and 80 over the component substrate 74.

The component substrate 74 at least partially or completely forms and carries the component first surface 68. The component substrate 74 has a thickness 82 that extends vertically (e.g., along the z-axis) between and to the component first surface 68 and a second surface 84 of the component substrate 74. The substrate second surface 84 may be configured as an exterior surface of the component substrate 74 prior to being (e.g., partially or completely) covered by the coating system 76 and its one or more component coatings 78 and 80. The substrate thickness 82 may be greater than one-half (1/2) of the wall thickness 66. The substrate thickness 82, for example, may be between two-third (2/3) and four-fifths (4/5) of the wall thickness 66. In other embodiments, however, it is contemplated the substrate thickness 82 may be greater than four-fifths (4/5) of the wall thickness 66 or less than one-half (1/2) of the wall thickness 66.

The component substrate 74 is constructed from substrate material. This substrate material may be an electrically conductive material. The substrate material, for example, may be or otherwise include metal. Examples of the metal include, but are not limited to, nickel (Ni), titanium (Ti), aluminum (Al), chromium (Cr), cobalt (Co), and alloys thereof. The metal, for example, may be a nickel or cobalt based superalloy such as, but not limited to, PWA 1484 or PWA 1429.

The inner coating 78 may be configured as a bond coating between the component substrate 74 and the outer coating 80. The inner coating 78 of FIG. 3 is bonded (e.g., directly) to the substrate second surface 84. The inner coating 78 at least partially or completely covers the substrate second surface 84 (e.g., along an x-y plane of FIG. 2). The inner coating 78 has a thickness 86 that extends vertically (e.g., along the z-axis) between and to the component substrate 74 and the outer coating 80. This inner coating thickness 86 may be less than one-seventh (1/7) of the wall thickness 66. The inner coating thickness 86, for example, may be between one-eighth (1/8) and one-fortieth (1/40) of the wall thickness 66.

The inner coating 78 is constructed from inner coating material. This inner coating material may be an electrically conductive material. The inner coating material, for example, may be or otherwise include metal. Examples of the metal include, but are not limited to, MCrAlY and MAlCrX, where "M" is nickel (Ni), cobalt (Co), iron (Fe) or any combination thereof, and where "Y" or "X" is hafnium (Hf), yttrium (Y), silicon (Si) or any combination thereof. The MCrAlY and MAlCrX may be further modified with strengthening elements such as, but not limited to, tantalum (Ta), rhenium (Re), tungsten (W), molybdenum (Mo) or any combination thereof. An example of the MCrAlY is PWA 286.

The inner coating 78 may be formed from a single layer of the inner coating material. The inner coating 78 may alternatively be formed from a plurality of layers of the inner coating material, where the inner coating material within each of those inner coating layers may be the same as one another or different from one another.

The outer coating 80 may be configured as a protective coating for the component substrate 74 and, more generally, the fluid cooled component 60. The outer coating 80, for example, may be configured as a thermal barrier layer and/or an environmental layer. The outer coating 80 at least partially or completely forms and carries the component second surface 70. The outer coating 80 of FIG. 3 is bonded (e.g., directly) to a second (e.g., exterior) surface 88 of the inner coating 78. The outer coating 80 at least partially or completely covers the inner coating second surface 88 as well as the underlying substrate second surface 84 (e.g., along the x-y plane of FIG. 2). The outer coating 80 has a thickness 90 that extends vertically (e.g., along the z-axis) between and to the inner coating 78 and the component second surface 70. This outer coating thickness 90 may be less than one-half (1/2) of the wall thickness 66. The outer coating thickness 90, for example, may be between one-third (1/3) and one-eighth (1/8) of the wall thickness 66. In other embodiments, however, it is contemplated the outer coating thickness 90 may be greater than one-half (1/2) of the wall thickness 66 or less than one-eighth (1/8) of the wall thickness 66.

The outer coating 80 is constructed from outer coating material. This outer coating material may be a non-electrically conductive material. The outer coating material, for example, may be or otherwise include ceramic. Examples of the ceramic include, but are not limited to, yttria stabilized zirconia (YSZ) and gadolinium zirconate (GdZ). The outer coating material of the present disclosure, however, is not limited to non-electrically conductive materials. In other embodiments, for example, the outer coating material may be an electrically conductive material; e.g., metal.

The outer coating 80 may be formed from a single layer of the outer coating material. The outer coating 80 may alternatively be formed from a plurality of layers of the outer coating material, where the outer coating material within each of those outer coating layers may be the same as one another or different from one another. For example, the outer coating 80 may include a thin interior layer of the YSZ and a thicker exterior later of the GdZ.

Each of the cooling apertures 64 extends along a longitudinal centerline 92 of the respective cooling aperture 64 between and to an inlet 94 into the respective cooling aperture 64 and an outlet 96 from the respective cooling aperture 64. This aperture centerline 92 may have a straight line geometry (e.g., in the x-y plane, in an x-z plane and/or in a y-z plane) from the cooling aperture inlet 94, through the component wall 62, to the cooling aperture outlet 96. The aperture centerline 92 of FIG. 3 is angularly offset from the component first surface 68 by a first angle 98, and the aperture centerline 92 is angularly offset from the component second surface 70 by a second angle 100. The first angle 98 of FIG. 3 may be equal to the second angle 100. The first angle 98 and the second angle 100 are each non-zero acute angles - greater than zero degrees (0°) and less than ninety degrees (90°). The first angle 98 and the second angle 100, for example, may each be between ten degrees (10°) and eighty degrees (80°); e.g., between twenty degrees (20°) and forty degrees (40°), or between forty degrees (40°) and sixty degrees (60°). Of course, in other embodiments, the first angle 98 and/or the second angle 100 may each be greater than eighty degrees (80°); e.g., a ninety degree (90°) right angle.

The cooling aperture inlet 94 of FIG. 3 is located in the component first surface 68. The cooling aperture inlet 94 thereby fluidly couples its respective cooling aperture 64 with the cooling fluid volume 72 along the component first surface 68. The cooling aperture inlet 94 has a cross-sectional geometry (e.g., shape and dimensions) when viewed in a reference plane parallel with the component first surface 68 at the respective cooling aperture inlet 94. This inlet geometry may have a curved shape; e.g., an oval shape, a circular shape, etc.

The cooling aperture outlet 96 of FIG. 3 is located in the component second surface 70. The cooling aperture outlet 96 thereby fluidly couples its respective cooling aperture 64 with the core flowpath 54 along the component second surface 70. The cooling aperture outlet 96 has a cross-sectional geometry (e.g., shape and dimensions) when viewed in a reference plane parallel with the component second surface 70 at the respective cooling aperture outlet 96. This outlet geometry may have a curved shape (e.g., an oval shape, a circular shape, or an amorphous curved shape), a polygonal shape (e.g., an elongated rectangular shape, a (e.g., equilateral) trapezoidal shape, or an amorphous polygonal shape), a combined curved-polygonal shape, or any other regular or irregular shape.

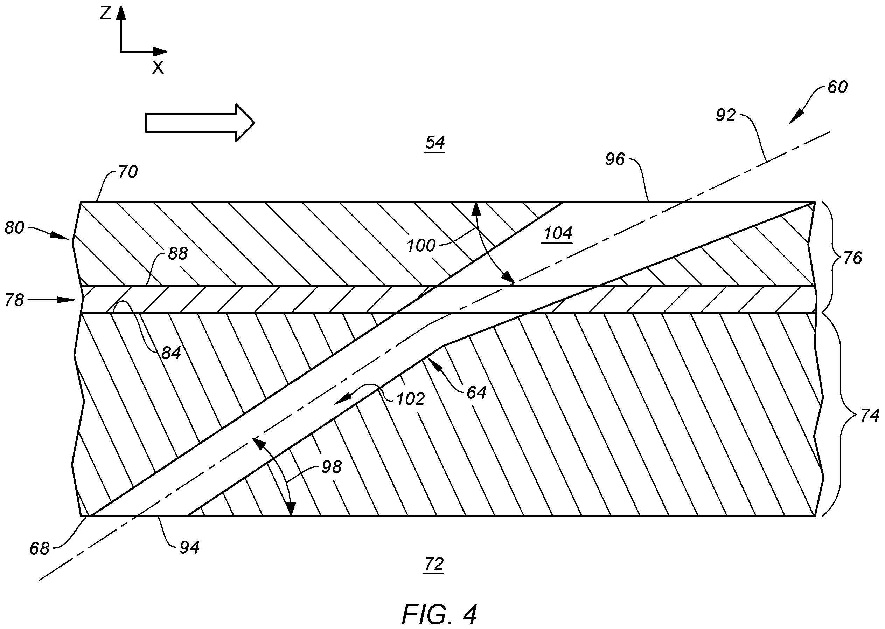

The outlet geometry may be exactly or substantially the same as the inlet geometry. For example, the shape of the cooling aperture outlet 96 may be exactly or substantially the same as the shape of the cooling aperture inlet 94. Dimensions (e.g., a width) of the cooling aperture outlet 96 may also be exactly or substantially equal to dimensions (e.g., a width) of the cooling aperture inlet 94. Alternatively, referring to FIG. 4, one or more of the cooling apertures 64 may each be configured with a metering section 102 at its cooling aperture inlet 94 and a diffuser section 104 at its cooling aperture outlet 96. Here, the dimensions of the cooling aperture outlet 96 are different (e.g., greater) than the dimensions of the cooling aperture inlet 94. The shape of the cooling aperture outlet 96 may also be different than the shape of the cooling aperture inlet 94. More particularly, the metering section 102 may have a uniform (e.g., constant) cross-sectional geometry as the respective cooling aperture 64 extends from its cooling aperture inlet 94 to its diffuser section 104. The diffuser section 104, by contrast, may have a cross-sectional geometry that changes (e.g., expands) as the respective cooling aperture 64 extends from its metering section 102 to its cooling aperture outlet 96. In addition, the aperture centerline 92 of FIG. 4 has a non-straight line (e.g., bent, curved, etc.) geometry, for example, at an intersection between the metering section 102 and the diffuser section 104. The first angle 98 of FIG. 4 is thereby different (e.g., greater) than the second angle 100. However, for ease of description, the cooling apertures 64 may be described below as shown in FIG. 3; e.g., without diffuser sections.

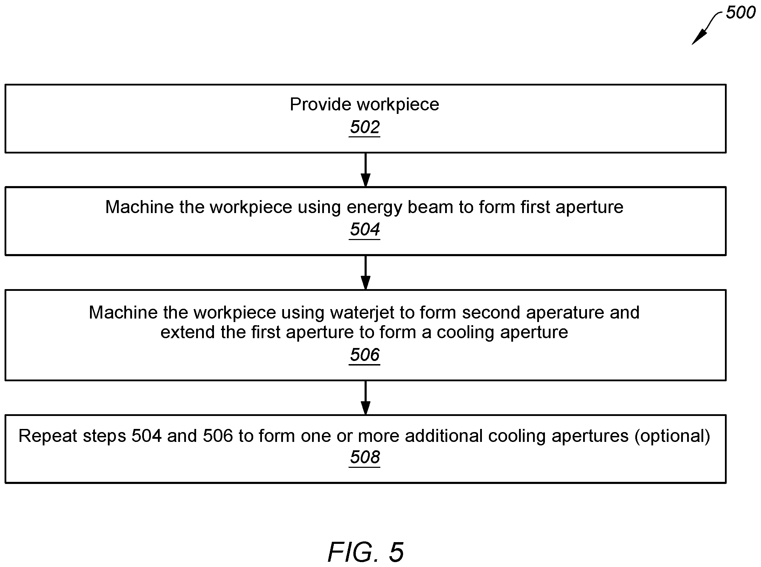

FIG. 5 is a flow diagram of a method 500 for manufacturing a component. For ease of description, the manufacturing method 500 is described below with reference to original manufacturing the fluid cooled component 60 of FIG. 3. The manufacturing method 500 of the present disclosure, however, is not limited to manufacturing such an exemplary fluid cooled component nor to manufacturing fluid cooled components in general. The manufacturing method 500, for example, may alternatively be performed to manufacture the fluid cooled component 60 of FIG. 4 or a component with various other machined features; e.g., cooling apertures or other through-holes, etc. Moreover, the manufacturing method 500 may also be performed for remanufacturing and/or otherwise repairing a previously originally manufactured component.

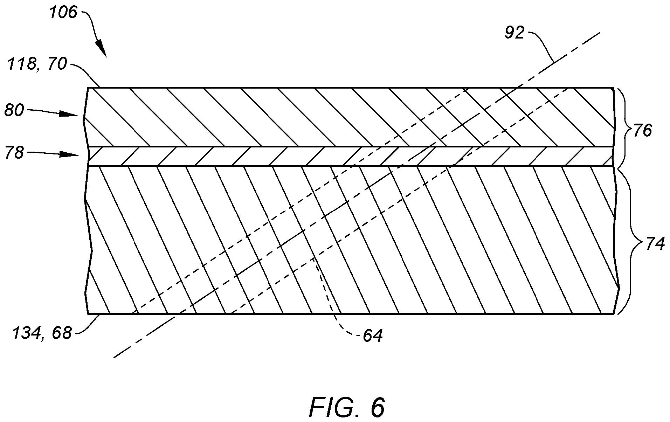

In step 502, referring to FIG. 6, a workpiece 106 is provided. This workpiece 106 may be a preform of the fluid cooled component 60 being manufactured. The workpiece 106, for example, may generally have the same configuration (e.g., construction, shape, size, etc.) as that of the fluid cooled component 60 being manufactured. The workpiece 106 of FIG. 6, in particular, includes the component substrate 74 and the coating system 76 applied over the component substrate 74. The workpiece 106 of FIG. 6, however, does not include any (or at least one or more) of the cooling apertures 64 which is/are to be formed during the manufacturing method 500. The present disclosure, however, is not limited to such an exemplary workpiece configuration. For example, the workpiece 106 may alternatively omit the outer coating 80 or the entire coating system 76, where the cooling apertures 64 are solely formed in the component substrate 74 and/or the outer coating 80 or the entire coating system 76 are applied subsequent to formation of the aperture(s) 64 in the component substrate 74.

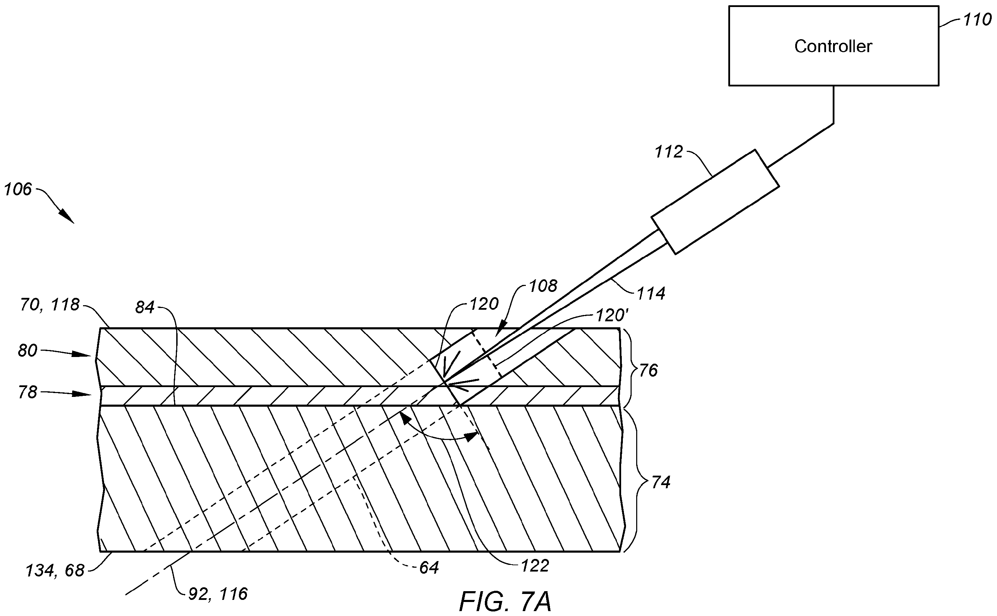

In step 504, referring to FIG. 7A, the workpiece 106 is machined to form a first aperture 108 in the workpiece 106. A controller 110, for example, may signal an energy beam machining device 112 to generate an energy beam 114 such as a laser beam or an electron beam. The controller 110 may further signal the energy beam machining device 112 to direct the energy beam 114 to a target location on the workpiece 106. Where the energy beam 114 is a laser beam, the laser beam may be directed to the target location by adjusting galvo mirrors. Where the energy beam 114 is an electron beam, the electron beam may be directed to the target location using magnetic manipulation. The energy beam 114 machines away material of the workpiece 106 (e.g., outer coating material, inner coating material and/or substrate material depending upon a depth of the first aperture 108; see FIGS. 7A-C) to form the first aperture 108. The energy beam 114 may be directed onto the workpiece 106 as a pulsed energy beam (e.g., with pulses) or a constant energy beam (e.g., without pulses).

The energy beam machining device 112 may be configured as or otherwise include percussion laser machining device or an ablation laser machining device. The energy beam machining device 112 may include a Nd:YAG laser, a fiber laser percussion drilling laser, a Yb disk laser, or an ultrashort pulse laser (e.g., a nano-, pico-, or femto- laser system). The laser beam (energy beam 114) may have various wavelengths such as, but not limited to, 1.07 microns, 0.535 microns, etc. A pulse width of the laser beam may be on the order of millisecond, nano-second, down to pico-second or femto-second. The use of different pulse widths may decrease the thermal interaction with the workpiece 106 and therefore reduce or eliminate recast and/or heat effected zone (HAZ) damage in the initial removal of material. The present disclosure, however, is not limited to the foregoing exemplary laser beam parameters.

This first aperture 108 is configured as a pilot aperture for machining the to-be-formed cooling aperture 64. The first aperture 108 of FIG. 7A, for example, is a blind aperture. This first aperture 108 projects longitudinally a centerline 116 of the first aperture 108 into the workpiece 106 from a face surface 118 of the workpiece 106 (e.g., the component second surface 70) to a longitudinal distal end of the first aperture 108. The first aperture centerline 116 may be parallel (e.g., coaxial) with or close to parallel with (e.g., within +/- 5° to 10° of) the centerline 92 of the to-be-formed cooling aperture 64. The first aperture centerline 116 may thereby be angularly offset from the workpiece face surface 118 by a non-zero acute angle; e.g., equal to or within +/- 5° to 10° of the second angle 100 (see FIG. 3). The aperture distal end of FIG. 7A is formed by an internal surface 120 of the workpiece 106. The internal surface 120 is angularly offset from the first aperture centerline 116 by a surface offset angle 122. This surface offset angle 122 may be equal to ninety degrees (90°) - a right angle. Alternatively, the surface offset angle 122 may be within five degrees (5°) or ten degrees (10°) of a right angle (e.g., 80-85°) - a steep acute angle.

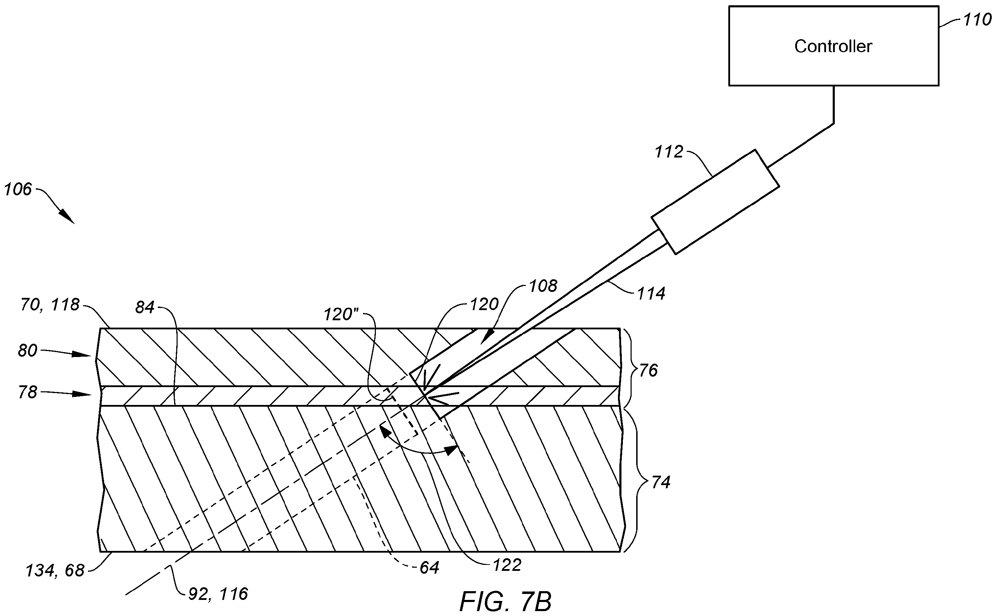

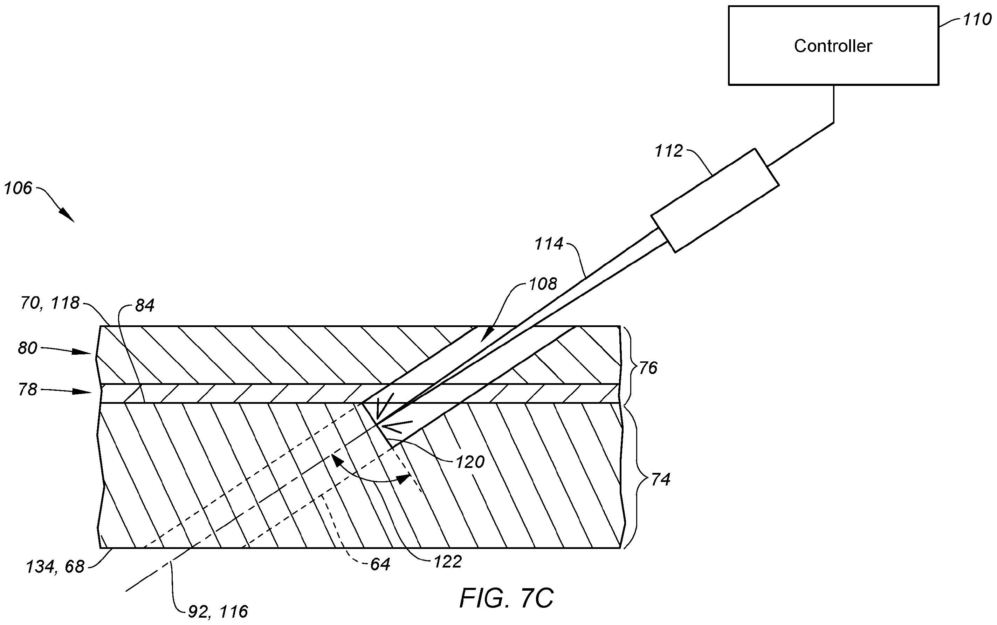

The first aperture 108 may project partially into and/or through the coating system 76 and its coatings 78 and/or 80. The first aperture 108 of FIG. 7A, for example, extends in the coating system 76 and its coatings 78 and 80 to the component substrate 74. Here, an edge of the internal surface 120 is adjacent the substrate second surface 84. With the arrangement of FIG. 7A, the internal surface 120 is formed by at least (or only) the inner coating material and the outer coating material; however, it is contemplated the internal surface 120 may alternatively be formed independent of the inner coating material (see dashed line 120'). In another example, referring to FIG. 7B, the first aperture 108 extends partially into the component substrate 74. With the arrangement of FIG. 7B, the internal surface 120 is formed by at least (or only) the substrate material, the inner coating material and the outer coating material; however, it is contemplated the internal surface 120 may alternatively be formed independent of the outer coating material (see dashed line 120"). In still another example, referring to FIG. 7C, the first aperture 108 extends completely into the component substrate 74. With the arrangement of FIG. 7C, the internal surface 120 is formed (e.g., completely) by the substrate material.

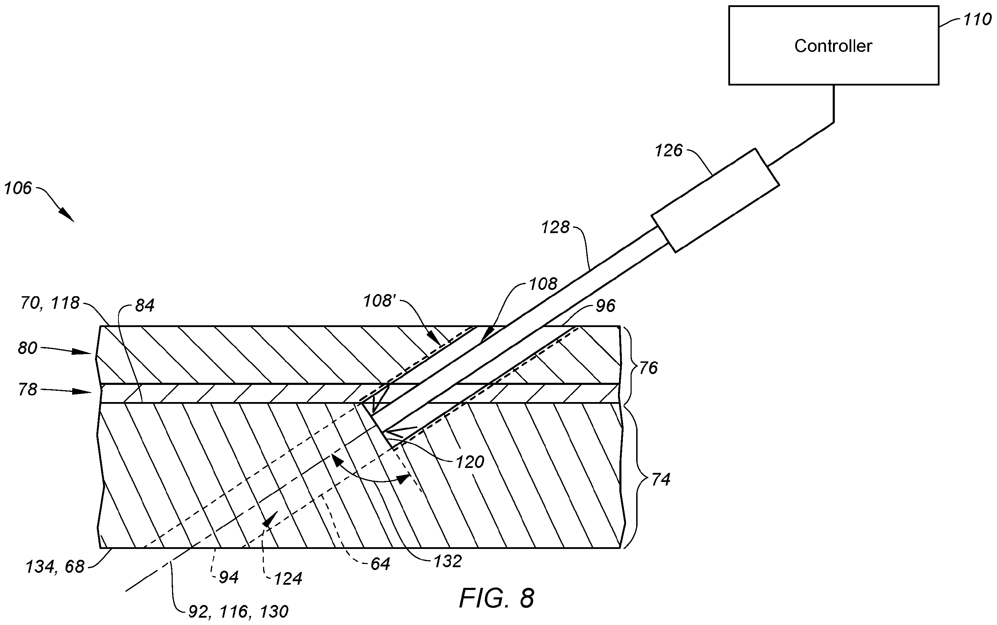

In step 506, referring to FIG. 8, the workpiece 106 is further machined to form a second aperture 124 in the workpiece 106. The controller 110 (or another controller), for example, may signal a waterjet machining device 126 to direct a waterjet 128 into the first aperture 108 to a target location on the internal surface 120. The waterjet 128 is a highly pressurized and concentrated stream (e.g., jet) of fluid, where the fluid may be a mixture of water and media (e.g., grit, abrasive material) entrained in the water, or pure water. The waterjet 128 machines away material of the workpiece 106 (e.g., outer coating material, inner coating material and/or substrate material depending upon the depth of the first aperture 108; see FIGS. 7A-C) to form the second aperture 124. During this waterjet machining, the waterjet 128 may remove recast material and/or thermally damaged material along a side of the first aperture 108. The waterjet 128 may also smooth out, enlarge and/or further define a geometry (e.g., shape and/or dimensions) the first aperture 108 to provide a modified (e.g., enlarged) first aperture 108'. This enlargement / further defining of the first aperture 108 may be performed directly by the waterjet 128. The enlargement / further defining may also or alternatively be performed indirectly by a fluid backflow out of the first aperture 108 following impingement of the waterjet 128 at a target location to form a respective portion of the second aperture 124.

The waterj et 128 is directed into / through the first aperture 108 for the machining of the second aperture 124 along a trajectory. This trajectory is selected such that a centerline 130 of the waterjet 128 is parallel (e.g., coaxial) with or close to parallel with (e.g., within +/- 5° to 10° of) the centerline 92 of the to-be-formed cooling aperture 64. The waterjet centerline 130 is also angularly offset from the internal surface 120 by a waterjet offset angle 132. This waterjet offset angle 132 may be equal to ninety degrees (90°) - a right angle. Alternatively, the waterjet offset angle 132 may be within five degrees (5°) or ten degrees (10°) of a right angle (e.g., 80-85°) - a steep acute angle. With this arrangement, the waterjet 128 may machine away the material without, for example, any or substantial skipping off of the internal surface 120. Note, the skipping off of fluid from a fluid jet may lead to removal of too much material from the workpiece 106 (e.g., formation of a cone-shaped opening at the workpiece face surface 118) and/or debonding, cracking and/or spallation of the coating system 76 and, in particular, the outer coating 80.

The formation of the second aperture 124 builds upon (e.g., extends) the formation of the first aperture 108 to provide the respective cooling aperture 64. The second aperture 124 of FIG. 8, for example, projects longitudinally along the aperture centerline 92 from the first aperture 108, through a remainder of a thickness of the workpiece 106, to a back surface 134 of the workpiece 106 (e.g., the component first surface 68). With this arrangement, at least (or only) the second aperture 124 and the modified first aperture 108' may collectively form the respective cooling aperture 64. The modified first aperture 108' forms the cooling aperture outlet 96 in the workpiece face surface 118. The second aperture 124 forms the cooling aperture inlet 94 in the workpiece back surface 134.

In step 508, the method steps 504 and 506 may be repeated one or more times to form one or more additional cooling apertures 64 in the workpiece 106. Upon formation of these cooling apertures 64, the machined workpiece 106 may form the (e.g., complete / fully formed) fluid cooled component 60. The formation of the multiple cooling apertures 64 may be performed in stages. For example, each first aperture 108 for a set of to-be-formed cooling apertures 64 may be formed prior to forming the second apertures 124 for that cooling aperture set. For the first stage (the formation of the first aperture(s) 108), the workpiece 106 may be arranged at a first location; e.g., within a machining chamber for the energy beam machining device 112. For the second stage (the formation of the second aperture(s) 124), the workpiece 106 may be arranged at a second location; e.g., within a machining chamber for the waterjet machining device 126. Alternatively, the energy beam machining device 112 and the waterjet machining device 126 may be collocated such that the workpiece 106 may remain stationary (e.g., fixtured) at a common (the same) location; e.g., within a common process chamber. The manufacturing method 500 of the present disclosure, however, is not limited to such exemplary machining device arrangements nor to a staged machining approach.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A manufacturing method, comprising:
providing a workpiece (106) that includes a face surface (118) and a back surface (134);
machining a first aperture (108) into the workpiece (106) using an energy beam (114), the first aperture (108) projecting partially into the workpiece (106) from the face surface (118) to an end of the first aperture (108); and
directing a waterjet (128) into the first aperture (108) to machine a second aperture (124) into the workpiece (106), the second aperture (124) extending from the end of the first aperture (108) to the back surface (134).

2. The manufacturing method of claim 1, wherein the energy beam (114) comprises a laser beam generated by a percussion laser machining device or an ablation laser machining device.

3. The manufacturing method of claim 1 or 2, wherein:
the workpiece (106) includes a substrate (74) and a coating (78, 80) over the substrate (74); and
the first aperture (108) projects from the face surface (118) and partially into or through the coating (78, 80),
wherein, optionally, the coating (78, 80) comprises a ceramic material or a metal material.

4. The manufacturing method of claim 1, 2 or 3, wherein a centerline (92) of the first aperture (108) is angularly offset from the face surface (118) by an acute angle (100).

5. The manufacturing method of any preceding claim, wherein:
the energy beam (114) extends along a centerline (116) when machining the first aperture (108); and
the waterjet (128) extends along the centerline (130) when machining the second aperture (124).

6. The manufacturing method of any preceding claim, wherein the waterjet (128) enlarges the first aperture (108) providing an enlarged first aperture (108') during the machining of the second aperture (124).

7. The manufacturing method of claim 6, wherein:
at least the enlarged first aperture (108') and the second aperture (124) form a cooling aperture (64) in the workpiece (106);
the cooling aperture (64) extends from an inlet (94) in the back surface (134) to an outlet (96) in the face surface (118).

8. The manufacturing method of any preceding claim, wherein the waterjet (128) removes recast and/or thermally damaged material from the first aperture (108) during the machining of the second aperture (124).

9. The manufacturing method of any preceding claim, wherein a centerline (92) of the second aperture (124) is angularly offset from the face surface (118) by an acute angle (98).

10. The manufacturing method of any preceding claim, wherein the waterjet (128) comprises a mixture of water and media entrained in the water.

11. The manufacturing method of any preceding claim, further comprising:
forming a component (60) of a turbine engine (20), the forming of the component (60) including the machining of the first aperture (108) and the machining of the second aperture (124);
a cooling hole (64) comprising the first aperture (108) and the second aperture (124).

12. The manufacturing method of claim 11, wherein:
the cooling hole (64) comprises a meter section (102) and a diffuser section (104); and
an outlet (96) of the diffuser section (104) is substantially formed by the machining of the first aperture (108) with the energy beam (114).

13. A manufacturing method, comprising:
providing a workpiece (106) with a face surface (118) and a back surface (134), the workpiece (106) extending between the face surface (118) and the back surface (134);
machining the workpiece (106) with an energy beam (114) to form a blind aperture (108), the blind aperture (108) projecting into the workpiece (106) from the face surface (118); and
machining the workpiece (106) with a waterjet (128) to extend the blind aperture (108) to the back surface (134) and form a cooling aperture (64), the cooling aperture (64) extending from an inlet (94) in the back surface (134) to an outlet (96) in the face surface (118),
wherein, optionally:
the workpiece (106) includes a substrate (74) and a coating (78, 80) over the substrate (74), and the blind aperture (108) projects through the coating (78, 80) to or into the substrate (74); and/or
the energy beam (114) comprises a pulsed laser beam.

14. The manufacturing method of claim 13, wherein:
the blind aperture (108) projects into the workpiece (106) to an end surface (120);
a centerline (130) of the waterjet (128) is angularly offset from the end surface (120) by an angle (122) when the machining of the workpiece (106) with the waterjet (128) begins; and
the angle (122) is between eighty-five degrees and ninety degrees.

15. A manufacturing method, comprising:
providing a workpiece (106) with a face surface (118) and a back surface (134), the workpiece (106) including a substrate (74) and a coating (78, 80) over the substrate (74), the substrate (74) forming the back surface (134), and the coating (78, 80) forming the face surface (118); and
forming a pilot aperture (108) into or through the coating (78, 80); and
extending the pilot aperture (108) through a remainder of the workpiece (106) to the back surface (134) using a waterjet (128).
